# EUROPEAN PATENT APPLICATION

(11) **EP 3 778 228 A1**
(43) Date of publication of application: **17.02.2021**
(21) Application number: 19778410.1
(22) Date of filing: 11.03.2019
(51) Int. Cl.: B32B 27/18, B32B 5/18

(54) **FOAMED MULTILAYER SHEET AND UNFOAMED MULTILAYER SHEET**

(30) Priority: 29.03.2018 JP 2018065282
(71) Applicant: Dai Nippon Printing Co., Ltd., Shinjuku-ku, Tokyo 162-8001 (JP)
(72) Inventor: YAMAUCHI, Satoshi, Tokyo 162-8001 (JP); TACHIHARA, Kenichi, Tokyo 162-8001 (JP); HIRAKAWA, Keiko, Tokyo 162-8001 (JP); SUGITA, Natsuo, Tokyo 162-8001 (JP); NOMOTO, Takafumi, Tokyo 162-8001 (JP)
(74) Representative: Müller-Boré & Partner Patentanwälte PartG mbB
(86) International application number: PCT/JP2019/009728
(87) International publication number: WO 2019/188201

(57) **Abstract**

A main object of the present disclosure is to provide a formed multilayer sheet in which the bleed-out of a light stabilizer is suppressed. The present disclosure achieves the object by providing a foamed multilayer sheet comprising a base material and a foamed resin layer arranged on one surface side of the base material; wherein the foamed resin layer contains a resin component and a light stabilizer, and the light stabilizer contains a copolymer of an olefin and a specified compound.

## Description

### Technical Field

The present disclosure relates to a foamed multilayer sheet and an unfoamed multilayer sheet for forming the foamed multilayer sheet.

### Background Art

For example, as a wall paper used in materials such as a wall, a ceiling, and a floor, a foamed multilayer sheet in which a foamed resin layer is arranged on a base material such as a lining paper has been known. Such a foamed multilayer sheet is generally obtained by using a unfoamed multilayer sheet that includes a base material and a foaming-agent-containing resin layer containing a foaming agent, and by making the forming-agent-containing resin layer foam.

For the purpose of improving durability, it has been known that a radical scavenger may be added to the foaming-agent-containing resin layer. For example, Patent Document 1 discloses an original fabric for foamed wall paper that includes a foaming-agent-containing resin layer containing an azo-based foaming agent, a zing-based foaming aid, and a radical scavenger. Further, a high molecular weight hindered amine radical scavenger is raised as an example of the radical scavenger.

### Citation List

### Patent Documents

Patent Document 1: Japanese Patent Application Laid-Open (JP-A) No. 2017-172091

### Summary

### Technical Problem

In Patent Document 1, the radical scavenger (light stabilizer) is added to the foaming-agent-containing resin layer to suppress bleed-out. Incidentally, Patent Document 1 does not specify a bleed component, but it is presumed to be the zinc-based foaming aid. On the other hand, when the radical scavenger (light stabilizer) itself bleeds out, the durability of the foamed multilayer sheet may decrease.

The present disclosure has been made in view of the above circumstances, and a main object of the present disclosure is to provide a foamed multilayer sheet in which bleed-out of a light stabilizer is suppressed.

### Solution to Problem

The present disclosure provides a foamed multilayer sheet comprising a base material and a foamed resin layer arranged on one surface side of the base material; wherein the foamed resin layer contains a resin component and a light stabilizer, and the light stabilizer contains a copolymer of an olefin and a compound represented by a general formula (1).

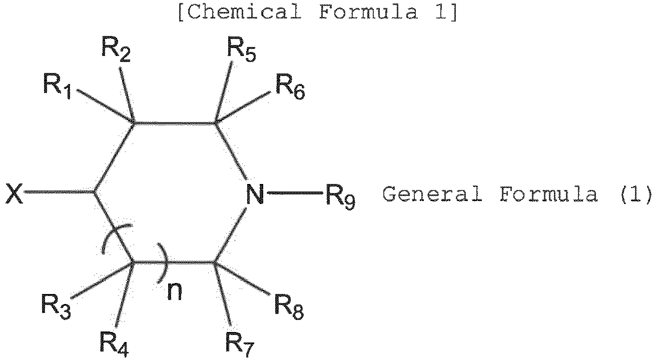

In the general formula (1), n is 0 or 1, X is a polymerizable group which is polymerizable with the olefin, R₁ to R₄ are each independently a hydrogen or a methyl group, R₅ to R₈ are each independently an alkyl group having 1 to 4 carbon atom(s), and R₉ is a hydrogen or an alkyl group having 1 to 4 carbon atom(s) .

According to the present disclosure, the specified polymer-type light stabilizer is used so as to obtain the foamed multilayer sheet in which the bleed-out of the light stabilizer is suppressed.

In the disclosure, the compound represented by the general formula (1) may be a compound represented by a general formula (2) .

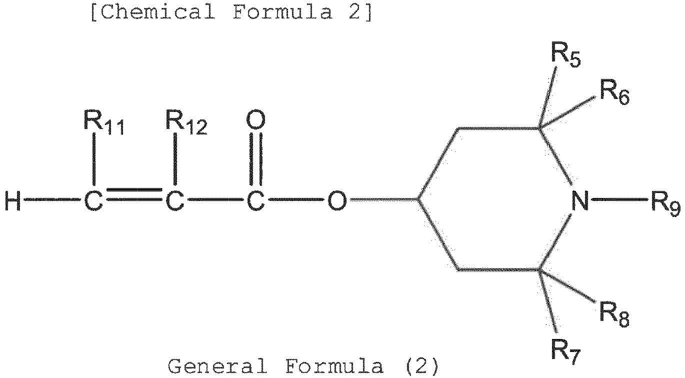

In the general formula (2) , R₁₁ and R₁₂ are each independently a hydrogen or a methyl group, R₅ to R₈ are each independently an alkyl group having 1 to 4 carbon atom(s), and Rg is a hydrogen or an alkyl group having 1 to 4 carbon atom(s).

In the disclosure, the foamed multilayer sheet may comprise a non-foaming resin layer A in a position opposite to the base material side with respect to the foamed resin layer.

In the disclosure, the foamed multilayer sheet may comprise a non-foaming resin layer B between the base material and the foamed resin layer.

In the disclosure, the foamed resin layer may contain at least one of an olefin-based resin and a cross-linking substance thereof as the resin component.

In the disclosure, the olefin-based resin may be at least one of a polyolefin, an olefin-vinyl ester copolymer, an olefin unsaturated carboxylic acid copolymer, and an olefin unsaturated carboxylic acid ester copolymer.

The present disclosure also provides an unfoamed multilayer sheet comprising a base material and a foaming-agent-containing resin layer arranged on one surface of the base material; wherein the foaming-agent-containing resin layer contains a resin component, a foaming agent, and a light stabilizer, and the light stabilizer contains a copolymer of an olefin and a compound represented by a general formula (1).

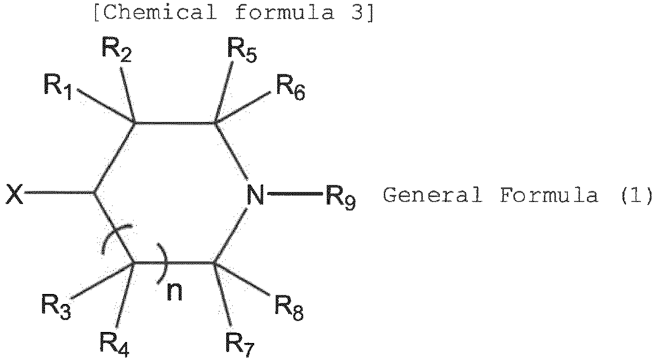

In the general formula (1), n is 0 or 1, X is a polymerizable group which is polymerizable with the olefin, R₁ to R₄ are each independently a hydrogen or a methyl group, R₅ to R₈ are each independently an alkyl group having 1 to 4 carbon atom(s), and R₉ is a hydrogen or an alkyl group having 1 to 4 carbon atom(s).

According to the present disclosure, the specified polymer-type light stabilizer is used, so as to obtain the unfoamed multilayer sheet capable of forming a foamed multilayer sheet in which the bleed-out of the light stabilizer is suppressed.

### Advantageous Effects

The foamed multilayer sheet of the present disclosure has an effect of suppressing the bleed-out of a light stabilizer.

### Brief Description of Drawings

FIG. 1 is a schematic cross-sectional view illustrating an example of the foamed multilayer sheet of the present disclosure.
FIG. 2 is a schematic cross-sectional view illustrating an example of the foamed multilayer sheet of the present disclosure.
FIG. 3 is a schematic cross-sectional view illustrating an example of the foamed multilayer sheet of the present disclosure.
FIG. 4 is a schematic cross-sectional view illustrating an example of the unfoamed multilayer sheet of the present disclosure.

### Description of Embodiments

Hereinafter, the foamed multilayer sheet and the unfoamed multilayer sheet of the present disclosure are explained in details.

### A. Foamed multilayer sheet

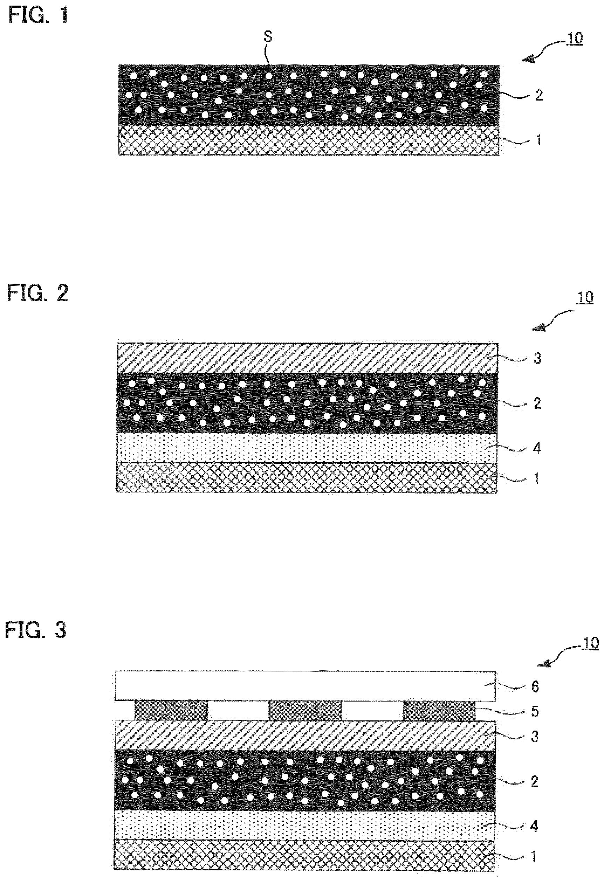

FIG. 1 is a schematic cross-sectional view illustrating an example of the foamed multilayer sheet of the present disclosure. The foamed multilayer sheet 10 illustrated in FIG. 1 comprises a base material 1 and a foamed resin layer 2 arranged on one surface side of the base material 1. The foamed resin layer 2 includes a foamed cell S inside, and contains a resin component and a light stabilizer. The present disclosure features a configuration in which the specified polymer-type light stabilizer is used as a light stabilizer contained in the foam resin layer 2.

Further, as shown in FIG. 2, the foamed multilayer sheet 10 may comprise a non-foaming resin layer A (non-foaming resin layer 3) in a position opposite to the base material 1 side with respect to the foamed resin layer 2. Similarly, the foamed multilayer sheet 10 may comprise a non-foaming resin layer B (non-foaming resin layer 4) between the base material 1 and the foamed resin layer 2. Further, as shown in FIG. 3, the foamed multilayer sheet 10 may have a design pattern layer 5 and a protective layer 6.

According to the present disclosure, the specified polymer-type light stabilizer is used so as to obtain the foamed multilayer sheet in which the bleed-out of the light stabilizer is suppressed. As described above, in Patent Document 1, the radical scavenger (light stabilizer) is added to the foaming-agent-containing resin layer to suppress bleed-out. Incidentally, Patent Document 1 does not specify a bleed component, but it is presumed to be the zinc-based foaming aid. Also, an unfoamed foaming agent and an antioxidant can be bleed components. On the other hand, when the radical scavenger (light stabilizer) itself bleeds out, the durability of the foamed multilayer sheet may decrease. In contrary, in the present disclosure, the specifiedpolymer-type light stabilizer is used, and thus bleed-out of a light stabilizer can be suppressed.

Also, as described above, the foamed resin layer is generally formed by making the foaming-agent-containing resin layer foam. By this foaming operation, the bleed-out of the light stabilizer itself tends to occur. In other words, it can be said that the bleed-out of the light stabilizer itself is a peculiar problem of the foamed resin layer. Specifically, the foaming operation is performed at a temperature of the melting point of the resin or more, and the foaming agent decomposes in a state where the resin melts and flows, and the generated gas forms a bubble layer in the resin. Therefore, the foaming operation is an environment in which the light stabilizer easily moves in the resin component. As a result, the bleed-out of the light stabilizer itself tends to occur. Even in such a situation, in the present disclosure, the specified polymer-type light stabilizer is used, and thusbleed-out of a light stabilizer can be suppressed.

### 1. Foamed resin layer

The foam resin layer is a layer arranged on one surface side of the base material. Further, the foamed resin layer contains at least a resin component and a light stabilizer.

### (1) Light stabilizer

The light stabilizer in the present disclosure contains a copolymer of an olefin and a compound represented by the general formula (1). Hereinafter, this copolymer is sometimes referred to as Copolymer A. The foamed resin layer may, as a light stabilizer, contain only the copolymer A, or may further contain other light stabilizers. In the latter case, it is preferable that the copolymer A is contained as a main component of the light stabilizer. The ratio of the copolymer A to all the light stabilizers contained in the foamed resin layer is, for example, 50% by mass or more, may be 70% by mass or more, or may be 90% by mass or more.

The copolymer A contains an olefin as a monomer component. Examples of the olefin include ethylene, propylene, 1-butene, 1-pentene, 1-hexene, 4-methyl-1-pentene, 1-octene, 1-decene, and 1-dodecene.

In addition, the copolymer A contains a compound represented by the general formula (1) as a monomer component. The X in the general formula (1) reacts with the olefin. Further, since a bulky functional group is present around the N element in the general formula (1), the copolymer A functions as a hindered amine-based light stabilizer.

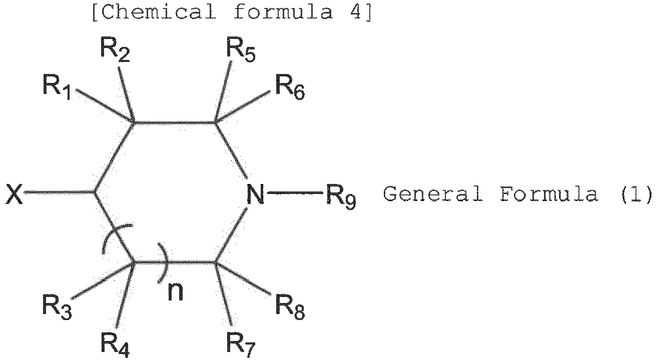

In the general formula (1), n is 0 or 1; n = 0 corresponds to a 5 membered ring structure, and n = 1 corresponds to a 6 membered ring structure. Further, X is not particularly limited as long as it is a polymerizable group capable of polymerizing with the olefin. The X preferably has a carbon-carbon double bond (C=C bond) . Further, the X may have a carbonyl group. The number of carbon atoms of X is, for example, 2 or more, and may be 3 or more. On the other hand, the number of carbon atoms of X is, for example, 15 or less, and may be 10 or less.

In addition, R₁ to R₄ are each independently a hydrogen or a methyl group. Among R₁ to R₄, one of them may be hydrogen, two of them may be hydrogen, three of them may be hydrogen, and all of them may be hydrogen. Further, R₅ to R₈ are each independently an alkyl group having 1 to 4 carbon atom(s). Among them, all of R₈ to R₈ are preferably methyl groups. Also, Rg is a hydrogen or an alkyl group having 1 to 4 carbon atom(s). Examples of the alkyl group include a methyl group, an ethyl group, an n-propyl group, an isopropyl group, an n-butyl group, a sec-butyl group, an isobutyl group, and a tert-butyl group.

In particular, the compound represented by the general formula (1) is preferably a compound represented by the general formula (2).

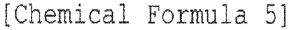

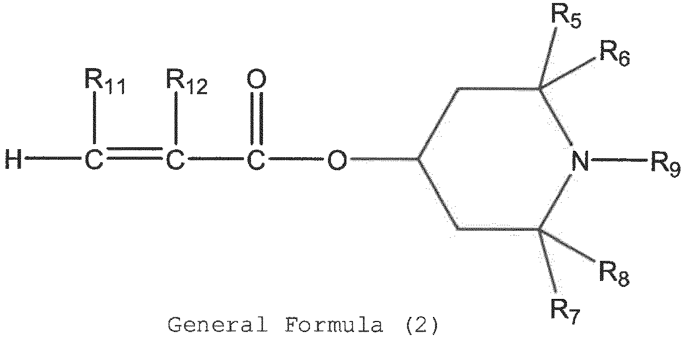

In the general formula (2) , R₁₁ and R₁₂ are each independently a hydrogen or a methyl group. Also, R₅ to R₈ are each independently an alkyl group having 1 to 4 carbon atom(s) . Among them, all of R₈ to R₈ are preferably methyl groups. Also, Rg is a hydrogen or an alkyl group having 1 to 4 carbon atom(s).

Examples of the compound represented by general formula (2) include 4-acryloyloxy-2,2,6,6-tetramethylpiperidine, 4-acryloyloxy-1,2,2,6,6-pentamethylpiperidine, 4-acryloyloxy-1-ethyl-2,2,6,6-tetramethylpiperidine, 4-acryloyloxy-1-propyl-2,2,6,6-tetramethylpiperidine, 4-acryloyloxy-1-butyl-2,2,6,6-tetramethylpiperidine, 4-methacryloyloxy-2,2,6,6-tetramethylpiperidine, 4-methacryloyloxy-1,2,2, 6, 6-pentamethylpiperidine, 4-methacryloyloxy-1-ethyl-2,2,6,6-tetramethylpiperidine, 4-methacryloyloxy-1-butyl-2,2,6,6-tetramethylpiperidine, 4-crotonoyloxy-2,2,6,6-tetramethylpiperidine, and 4-crotonoyloxy-1-propyl-2,2,6,6-tetramethylpiperidine.

In the copolymer A, the ratio of the compound represented by the general formula (1) to the total of the olefin and the compound represented by the general formula (1) is, for example, 0.0005 mol% or more, and may be 0.001 mol% or more. On the other hand, the ratio is, for example, 1 mol% or less, may be 0.85 mol% or less, or may be 0.55 mol% or less.

A melting point of the copolymer A is not particularly limited, but may be, for example, 90°C or higher, 100°C or higher, or 110°C or higher. Further, the melting point of the copolymer A is, for example, 140°C or less, may be 130°C or less, or may be 120°C or less.

The melt flow rate (MFR) of the copolymer A is, for example, 0.1 g / 10 minutes or more, may be 0.5 g / 10 min or more, and may be 1 g / 10 minutes or more. On the other hand, the MFR value is, for example, 200 g / 10 minutes or less, may be 20 g / 10 minutes or less, or may be 5 g / 10 minutes or less. The MFR value can be measured under a condition of a temperature of 190°C and a load of 21. 18 N (2.16 kgf) by a test method described in JIS K7210:2014 "A method for determining a melt mass flow rate (MFR) and a melt volume flow rate (MVR) of a plastic-thermoplastic resin".

The weight average molecular weight of the copolymer A is, for example, 10,000 or more, may be 20,000 or more, or may be 30,000 or more. On the other hand, the weight average molecular weight of the copolymer A is, for example, 200,000 or less, may be 190,000 or less, or may be 180,000 or less. If the weight average molecular weight is too large, moldability may decrease. In addition, the ratio (Mw/Mn) of the weight average molecular weight (Mw) to the number average molecular weight (Mn) is, for example, 3 or more and 120 or less, and may be 5 or more and 20 or less. Note that the average molecular weight in the present disclosure is a value measured by gel permeation chromatography (GPC) using polystyrene as a standard material.

A method for synthesizing the copolymer A is not particularly limited, and examples thereof include a radical polymerization method. In the radical polymerization method, a general catalyst can be used. Alternatively, the copolymer A may be synthesized by a high-pressure radical polymerization method. The polymerization pressure is, for example, 1000 kg/cm² or more and 5000 kg/cm² or less. The polymerization temperature is, for example, 100°C or more and 400°C or less.

The content of the light stabilizer relative to 100 parts by mass of the resin component is, for example, 0.05 parts by mass or more, may be 0.1 parts by mass or more, may be 0.2 parts by mass or more, or may be 0.3 parts by mass or more. If the content of the light stabilizer is too small, good durability may not be obtained in some cases. On the other hand, the content of the light stabilizer relative to 100 parts by mass of the resin component is, for example, 10 parts by mass or less, may be 5 parts by mass or less, or may be 3 parts by mass or less. Even if the content of the light stabilizer is too large, there may be a case where there is no significant difference in durability obtained.

### (2) Resin component

It is preferable that the foamed resin layer contains at least one of a resin and a crosslinked product thereof as a resin component. The crosslinked product is a crosslinked product in which a molecular chain of the resin is crosslinked, and may be a crosslinked product cross-linked by an electron beam irradiation, or a crosslinked product crosslinked by a crosslinking agent.

Examples of the resin include a vinyl chloride resin, an olefin-based resin, a polystyrene-based resin, a polyvinyl acetate, a polyurethane, a polytetrafluoroethylene, an acrylonitrile-butadiene-styrene copolymer (ABS) resin, an acrylic resin, a polyamide, a polyacetal, a polycarbonate, a polyester, a polyphenylenesulfide, and a polyetheretherketone. In the foamed resin layer, one kind of these may be contained alone, or two or more kinds of these may be contained.

In the present disclosure, it is preferable that the foamed resin layer contains at least one of an olefin-based resin and a crosslinked product thereof as a resin component. When the copolymer A (a copolymer using an olefin) is used as the above-described light stabilizer, it has high compatibility with the resin component. Therefore, the bleed-out of the light stabilizer can be effectively suppressed. Examples of the olefin-based resin include a polyolefin, an olefin vinyl ester copolymer, an olefin unsaturated carboxylic acid copolymer, and an olefin unsaturated carboxylic acid ester copolymer.

Examples of the polyolefin include a polyethylene (PE) and a polypropylene (PP), and PE is preferred among them. Examples of PE include a low-density polyethylene (LDPE), a medium-density polyethylene (MDPE), a high-density polyethylene (HDPE), and a linear low-density polyethylene (LLDPE) .

The olefin vinyl ester copolymer is a copolymer containing an olefin and a vinyl ester as a monomer component, and may be a binary copolymer or a ternary or higher copolymer. Examples of the olefin include ethylene, propylene, 1-butene, 1-pentene, 1-hexene, 4-methyl-1-pentene, 1-octene, 1-decene, and 1-dodecene. On the other hand, examples of the vinyl ester include vinyl acetate, vinyl caproate, vinyl propionate, vinyl caprylate, vinyl laurate, and vinyl stearate.

Specific examples of the olefin vinyl ester copolymer include an ethylene-vinyl acetate copolymer (EVA), an ethylene-vinyl caproate copolymer, an ethylene-vinyl propionate copolymer, an ethylene-vinyl caprylate copolymer, an ethylene-vinyl laurate copolymer, and an ethylene-vinyl stearate copolymer.

The olefin unsaturated carboxylic acid copolymer is a copolymer containing an olefin and an unsaturated carboxylic acid as a monomer component, and may be a binary copolymer or a ternary or higher copolymer. Examples of the olefin include ethylene, propylene, 1-butene, 1-pentene, 1-hexene, 4-methyl-1-pentene, 1-octene, 1-decene, and1-dodecene. On the other hand, examples of the unsaturated carboxylic acid include acrylic acid, methacrylic acid, maleic acid and fumaric acid.

Specific examples of the olefin unsaturated carboxylic acid copolymer include an ethylene-acrylic acid copolymer (EAA) and an ethylene-methacrylic acid copolymer (EMAA).

Examples of the olefin unsaturated carboxylic ester copolymer include an ethylene-methyl acrylate copolymer (EMA), an ethylene-ethyl acrylate copolymer (EEA), an ethylene-methyl methacrylate copolymer (EMMA), and an ethylene-ethyl methacrylate copolymer (EEMA).

It is preferable that the foamed resin layer mainly contains at least one of an olefin-based resin and a crosslinked product thereof as a resin component. In this case, the foamed resin layer may contain the olefin-based resin as a main component, may contain the crosslinked product of the olefin-based resin as a main component, and may contain a mixture of the olefin-based resin and the crosslinked product thereof as a main component. In addition, a ratio of at least one of the olefin-based resin and the crosslinked product thereof to all the resin components in the foamed resin layer is, for example, 70% by mass or more, may be 80% by mass or more, or may be 90% by mass or more. Further, the foamed resin layer may contain, as a resin component, only at least one of the olefin-based resin and the crosslinked product thereof.

From the viewpoint of melt extrusion suitability, the melt flow rate (MFR) value of the resin used in the foam resin layer is, for example, 5 g / 10 minutes or more and may be 20 g / 10 minutes or more. On the other hand, the MFR value of the resin is, for example, 200 g / 10 minutes or less, and may be 100 g / 10 minutes or less. If the MFR value is too large, the resulting foamed resin layer becomes too soft and maybe inferior in scratch resistance.

The content of the resin component in the foamed resin layer is, for example, 30% by mass or more and 80% by mass or less, may be 40% by mass or more and 70% by mass or less, or may be 50% by mass or more and 60% by mass or less. If the content of the resin component is too large, a sufficient foaming ratio may not be obtained in some cases. On the other hand, if the content of the resin component is too small, it may be inferior in extrusion film production nature.

### (3) Inorganic filler

The foamed resin layer may contain an inorganic filler for the purpose such as imparting flame retardancy, suppressing see-through, and improving the surface strength. Examples of the inorganic filler include, but are not limited to, calcium carbonate, aluminum hydroxide, magnesium hydroxide, antimony trioxide, zinc borate, a molybdenum compound, and titanium dioxide. One of these may be used alone or two kinds or more of these may be used in combination.

The content of the inorganic filler is not particularly limited, but is, for example, with respect to 100 parts by mass of the resin component, 0 parts by mass or more and 100 parts by mass or less, and may be 20 parts by mass or more and 70 parts by mass or less.

### (4) Additive

If necessary, the foamed resin layer may contain additives such as pigments, antioxidants, crosslinking agents, crosslinking aids, foaming aids, antifungal agents, insect repellents, preservatives, surface treatment agents, antibacterial agents, diluents, deodorants, and plasticizers. Further, an unfoamed foaming agent may be contained.

### (5) Structure of foamed resin layer

The foamed resin layer includes a foam cell inside. The foam cell may be a closed cell or an open cell, and the closed cell and the open cell may be mixed. Further, features such as the number, size, density, and shape of the foam cell are not particularly limited, and can be appropriately designed depending on factors such as the type and use of the foamed multilayer sheet of the present disclosure. The foam cell can be formed by bringing the foaming agent contained in the foaming agent-containing resin composition used for forming a foam resin layer into foaming.

The thickness of the foamed resin layer is not particularly limited, but is, for example, 350 µm or more and 1500 µm or less, and may be 500 µm or more and 1200 µm or less.

### 2. Base Material

The base material in the present disclosure is a member that holds the foamed resin layer. Examples of such a base material include a fibrous base material. Examples of the fibrous base material include known materials used for wallpaper applications such as paper, nonwoven fabric, and woven fabric. The paper may be a general paper or a flame-retardant paper.

The flame-retardant paper is a paper in which a flame retardant is contained in a general paper. Examples of the flame retardant include a nitrogen compound such as urea and an ammonium compound; a hydroxide (preferably hydrate) such as magnesium hydroxide and aluminum hydroxide; and a flame retardant containing phosphorus or halogen elements having self-extinguishing properties. Among them, a compound containing crystal water such as magnesiumhydroxide can be flame retarded by heat of vaporization of the crystal water during combustion decomposition.

The nonwoven fabric may be a wet nonwoven fabric such as papermaking type, or may be a dry nonwoven fabric such as an adhesive type, a mechanical bonding (needle punching, stitch bonding) type, or a spun bonding type. Specific examples of the nonwoven fabric include a resin fiber nonwoven fabric such as rayon paper, nonwoven fabric obtained by mixing pulp, Japanese paper, glass nonwoven fabric, asbestos nonwoven fabric, polyester nonwoven fabric, and polycarbonate nonwoven fabric.

If necessary, the base material may optionally comprise any material such as a dry paper strengthening agent, a wet paper strengthening agent, a colorant, a sizing agent, and a fixing agent.

The thickness of the base material is not particularly limited, and may be appropriately set depending on the application of the foamed multilayer sheet of the present disclosure. The basis weight of the base material is, for example, 30 g/m² or more and 100 g/m² or less, and may be 50 g/m² or more and 70 g/m² or less.

### 3. Optional configuration

The foamed multilayer sheet of the present disclosure comprises a base material and a foamed resin layer arranged on one surface side of the base material. Furthermore, the foamed multilayer sheet may comprise any optional configuration.

### (1) Non-foaming resin layer A

The foamed multilayer sheet of the present disclosure may comprise a non-foaming resin layer A in a position opposite to the base material side with respect to the foamed resin layer. By arranging the non-foaming resin layer A, for example, the surface strength of the foamed resin layer can be increased. In other words, it is preferable that the non-foaming resin layer A functions as a protective layer of the foamed resin layer.

The non-foaming resin layer A preferably contains at least one of a resin and a crosslinked product thereof as a resin component. The crosslinked product is a crosslinked product in which a molecular chain of the resin is crosslinked, and may be a crosslinked product crosslinked by electron be amir radiation, or a crosslinked product crosslinked by a crosslinking agent.

Examples of the resin include an olefin-based resin, a methacryl-based resin, a thermoplastic polyester-based resin, a polyvinyl alcohol-based resin, and a fluorine-based resin. In the non-foaming resin layer A, one kind of these maybe contained alone, or two or more kinds of these may be contained.

Examples of the olefin-based resin include the same materials as those of the above-described foamed resin layer. Example of preferred olefin-based resins used for the non-foaming resin layer A include a simple resin such as a polyethylene (low-density polyethylene (LDPE), high-density polyethylene (HDPE)), a propylene, a polybutene, a polybutadiene, and a polyisoprene, a copolymer of an ethylene and an α-olefin having 4 or more carbon atoms (linearlow-densitypolyethylene (LLDPE)), an ethylene(meth)acrylic acid-based copolymer such as an ethylene-acrylic acid copolymer, and an ethylene-methyl acrylate copolymer, an ethylene-ethyl acrylate copolymer, and ethylene-methacrylic acid copolymer, an ethylene-vinyl acetate copolymer (EVA), a saponified ethylene-vinyl acetate copolymer, an ethylene-vinyl alcohol copolymer, and an ionomer. In addition, "(meth)acrylic acid" means at least one of acrylic acid and methacrylic acid. The same applies to the other parts described as (meth).

The non-foaming resin layer A may contain known additives such as a filler, a colorant, a light stabilizer, a foaming agent, as well as a lubricant, and an antibacterial agent. The non-foaming resin layer A may be transparent, non-colored, or colored. Also, the thickness of the non-foaming resin layer A is not particularly limited, but is, for example, 2 µm or more and 50 µm or less.

### (2) Non-foaming resin layer B

The foamed multilayer sheet of the present disclosure may comprise a non-foaming resin layer B between the base material and the foamed resin layer. The non-foaming resin layer B has, for example, an adhesive function, so that adhesion between the foamed resin layer and the base material can be enhanced.

It is preferable that the non-foaming resin layer B contains at least one of a resin and a crosslinked product thereof as a resin component. The crosslinked product is a crosslinked product in which a molecular chain of the resin is crosslinked, and may be a crosslinked product crosslinked by electron beam irradiation, or a crosslinked product crosslinked by a crosslinking agent.

Examples of the resin include an olefin-based resin. Examples of the olefin-based resin include the same materials as those of the above-described foamed resin layer. Examples of a preferred olefin-based resin used for the non-foaming resin layer B includes an ethylene-vinyl acetate copolymer (EVA) . The content (copolymerization ratio) of a vinyl acetate component (VA component) in the ethylene-vinyl acetate copolymer (EVA) is, for example, 10% by mass or more and 46% by mass or less, and may be 15% by mass or more and 41% by mass or less. Also, the thickness of the non-foaming resin layer B is not particularly limited, but is, for example, 5 µm or more and 50 µm or less.

### (3) Design pattern layer

The foamed multilayer sheet of the present disclosure may comprise a design pattern layer in a position opposite to the base material side with respect to the foamed resin layer. By arranging the design pattern layer, design properties can be easily imparted to the foamed multilayer sheet. Note that the foamed multilayer sheet of the present disclosure may not comprise a design pattern layer.

The design pattern layer may be in direct contact with the foamed resin layer or may be in contact with the foamed resin layer interposing a primer layer or an adhesive layer. In addition, when the foamed multilayer sheet comprises the non-foaming resin layer A, the foamed multilayer sheet may comprise the foamed resin layer, the non-foaming resin layer A, and the design pattern layer in this order. In this case, the design pattern layer may be in direct contact with the non-foaming resin layer A, or may be in contact with the non-foaming resin layer A interposing the primer layer or the adhesive layer.

The design pattern layer may include at least a design pattern portion and may include a support portion for supporting the design pattern portion depending on a method for forming the design pattern layer.

The design pattern in the design pattern portion is not particularly limited and can be appropriately selected depending on the purpose. Examples of the design pattern include a grain pattern, a stone pattern, a sand pattern, a tile pattern, a brick pattern, a texture pattern, a leather tie-dyed pattern, a geometric pattern, a character, a symbol, an abstract pattern, and a flower pattern.

The design pattern layer may be formed by, for example, printing the design pattern portion on one surface of the support portion using an ink for printing. Further, instead of the support portion, the design pattern portion may be directly printed on the surface of the foamed resin layer or the non-foaming resin layer A using an ink for printing.

The ink for printing includes, for example, at least a colorant, a binder resin, and a solvent. As for the details of the composition of the ink for printing, for example, a composition similar to that of the ink for printing used for forming the design pattern layer disclosed in JP-A No. 2017-043009 and JP-A No. 2011-179161 may be employed. Also, as the ink for printing, a known or commercially available ink can be used. The printing method is not particularly limited, and a known printing method can be used. In addition, when the design pattern portion is formed entirely solid, a known coating method can be used.

The thickness of the design pattern layer is not particularly limited and can be appropriately set depending on the type of the design pattern. The thickness of the design pattern layer is, for example, 0.1 µm or more and 10 µm or less.

### (4) Surface protective layer

The foamed multilayer sheet of the present disclosure may comprise a surface protective layer in a position opposite to the base material side with respect to the foamed resin layer. By arranging the surface protective layer, the surface strength of the foamed multilayer sheet can be increased.

The kind of the surface protective layer is not particularly limited and may be appropriately selected depending on the purpose of arranging the surface protective layer. For example, for purposes of gloss control, the surface protective layer may contain, for example, a known matting agent such as silica. Also, for purpose of protecting the design pattern layer or for purpose of improving the scratch resistance or stain resistance, the surface protective layer may contain, for example, a cured product of an ionizing radiation curable resin as a resin component.

The thickness of the surface protective layer is not particularly limited, and may be appropriately set. The thickness of the surface protective layer is, for example, 0.5 µm or more and 10 µm or less.

The surface protective layer may be in direct contact with the foamed resin layer or may be in contact with the foamed resin layer interposing a primer layer or an adhesive layer.

Further, when the foamed multilayer sheet comprises the non-foaming resin layer A, it is preferrable that the foamed multilayer sheet comprises the foamed resin layer, the non-foaming resin layer A, and the surface protective layer in this order. In this case, the surface protective layer may be in direct contact with the non-foaming resin layer A, or may be in contact with the non-foaming resin layer A interposing the primer layer or the adhesive layer.

In addition, when the foamed multilayer sheet comprises the design pattern layer, it is preferable that the foamed multilayer sheet comprises the foamed resin layer, the design pattern layer, and the surface protective layer in this order. In this case, the surface protective layer may be in direct contact with the design pattern layer, or may be in contact with the design pattern layer interposing the primer layer or the adhesive layer. When the foamed multilayer sheet comprises the non-foaming resin layer A and the design pattern layer, it is preferable that the foamed multilayer sheet comprises the foamed resin layer, the non-foaming resin layer A, the design pattern layer, and the surface protective layer in this order.

### (5) Primer layer

The foamed multilayer sheet of the present disclosure may comprise a primer layer between each of the layers constituting the foamed multilayer sheet.

Examples of a resin contained in the primer layer include an acrylic resin, a vinyl chloride-vinyl acetate copolymer, a polyester resin, a polyurethane resin, a chlorinated polypropylene resin, and a chlorinated polyethylene resin. Among these, the acrylic resin and the chlorinated polypropylene resin are preferred.

The thickness of the primer layer is not particularly limited, and may be appropriately set. The thickness of the primer layer is, for example, 0.1 µm or more and 10 µm or less, and may be 0.1 µm or more and 5 µm or less.

Examples of the arrangement position of the primer layer include interlayer between the base material and the non-foaming resin layer B, interlayer between the non-foaming resin layer B and the foamed resin layer, interlayer between the foamed resin layer and the non-foaming resin layer A, interlayer between the non-foaming resin layer A and the design pattern layer, interlayer between the non-foaming resin layer A and the surface protective layer, and interlayer between the design pattern layer and the surface protective layer.

### (6) Embossed pattern

The foamed multilayer sheet of the present disclosure may comprise an embossed pattern on the outermost surface which is the opposite side of the base material with respect to the foamed resin layer. Examples of the embossedpattern include wood board conduit grooves, stone surface irregularities, fabric surface texture, satin finish, sand, hair lines, line grooves, and combinations thereof.

### 4. Applications

The foamed multilayer sheet of the present disclosure can be used as, for example, an interior material such as a foamed wallpaper and various decorative materials. Among them, it is useful as the foamed wallpaper.

### 5. Production Method

A method for producing the foamed multilayer sheet of the present disclosure is not particularly limited, and examples thereof include a method comprising a foaming step in which a foaming-agent-containing resin layer of an unfoamed multilayer sheet to be described later is heated and foamed to form a foamed resin layer. The heating temperature and the heating time in the foaming step are not particularly limited as long as the foam cell can be formed in the layer by decomposition of the foaming agent contained in the foaming-agent-containing resin layer, and can be appropriately set depending on the composition of the foaming-agent-containing resin layer.

### B. Unfoamed multilayer sheet

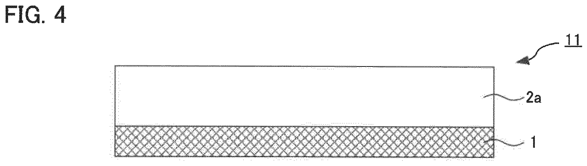

FIG. 4 is a schematic cross-sectional view illustrating an example of the unfoamed multilayer sheet of the present disclosure. The unfoamed multilayer sheet 11 illustrated in FIG. 4 comprises a base material 1 and a foaming-agent-containing resin layer 2a arranged on one surface side of the base material 1. The foaming-agent-containing resin layer 2a contains a resin component, a foaming agent, and a light stabilizer. The present disclosure features a configuration in which a specified polymer-type light stabilizer is used as a light stabilizer contained in the foaming-agent-containing resin layer 2a.

According to the present disclosure, the specified polymer-type light stabilizer is used, so as to obtain the unfoamed multilayer sheet capable of forming a foamed multilayer sheet in which the bleed-out of the light stabilizer is suppressed.

### 1. Foaming-agent-containing resin layer

The foaming-agent-containing resin layer contains at least a resin component, a foaming agent, and a light stabilizer. The resin component and the light stabilizer are the same as those described in "A. Foamed multilayer sheet" above; thus, the description herein is omitted.

The foaming agent contained in the foaming-agent-containing resin layer may be selected from known foaming agents. Examples of the foaming agent include an organic thermally decomposable foaming agent such as an azo-based one such as azodicarbonamide (ADCA) and azobisformamide; and hydrazide-based one such as oxybenzenesulfonylhydrazide (OBSH) and paratoluenesulfonylhydrazide, and an inorganic foaming agent such as a microcapsule foaming agent and a sodium bicarbonate. One of these alone may be contained in the forming-agent-containing resin layer, and two kinds or more thereof may be contained.

The content of the foaming agent can be appropriately set depending on factors such as the type of the foaming agent and the foaming rate. The foaming rate is, for example, 1.5 times or more, and may be 3 times or more and 7 times or less. Further, the content of the foaming agent with respect to 100 parts by mass of the resin component contained in the foaming-agent-containing resin composition is, for example, 1 part by mass or more and 20 parts by mass or less, and may be 3 parts by mass or more and 10 parts by mass or less.

The foaming-agent-containing resin layer may contain a foaming aid. Examples of the foaming aid include known materials used as foaming aids, such as metal oxides and fatty acid metal salts, and can be appropriately selected depending on the kind of the foaming agent. Specific examples of the foaming aid include zinc stearate, calcium stearate, magnesium stearate, zinc octylate, calcium octylate, magnesium octylate, zinc laurate, calcium laurate, magnesium laurate, zinc oxide, magnesium oxide, and a carboxylic acid hydrazide compound. One kind of these may be contained alone, or two or more kinds of these may be contained in the foaming-agent-containing resin layer.

When the foaming-agent-containing resin layer contains an olefin unsaturated carboxylic acid copolymer, it is preferable to include a carboxylic acid hydrazide compound as a foaming aid. Even when the carboxylic acid hydrazide compound is used in combination with an olefin unsaturated carboxylic acid copolymer including a carboxyl group, the effect of the foaming aid is not easily deactivated due to a chemical reaction. Therefore, it is possible to suppress yellowing of the foamed resin layer or the base material due to the formation of a burn or a chromophore generated during foaming of the foaming-agent-containing resin layer. Examples of the carboxylic acid hydrazide compound include a monohydrazide compound including one hydrazide group in a molecule, a dihydrazide compound including two hydrazide groups in a molecule, and a polyhydrazide compound including three or more hydrazide groups in a molecule. Specific monohydrazide compound, dihydrazide compound and polyhydrazide compound may be, for example, the compounds disclosed in JP-A No. 2009-197219. One kind of these may be contained alone, or two kinds or more of these may be contained in the foaming-agent-containing resin composition.

The content of the foaming aid is not particularly limited, but is, for example, per 100 parts by mass of the resin component contained in the foaming-agent-containing resin layer, 0.3 parts by mass or more and 10 parts by mass or less, and may be 1 part by mass or more and 5 parts by mass or less.

Further, it is preferable that the foaming-agent-containing resin layer contains azodicarbonamide (ADCA) as a foaming agent and a carboxylic acid hydrazide compound as a foaming aid. In this case, the content of the carboxylic acid hydrazide compound is, for example, with respect to 1 part by mass of azodicarbonamide (ADCA), 0.2 parts by mass or more and 1 part by mass or less.

The foaming-agent-containing resin layer may contain the inorganic filler and various kinds of additives described above. Further, the thickness of the foaming-agent-containing resin layer is, for example, 30 µm or more and 300 µm or less, and may be 50 µm or more and 150 µm or less.

### 2. Base material

The base material in the unfoamed multilayer sheet of the present disclosure is in the same contents as those described in "A. Foamed multilayer sheet" above; thus, the description herein is omitted.

### 3. Optional configurations

The unfoamed multilayer sheet of the present disclosure comprises a base material and a foaming-agent-containing resin layer arranged on one surface side of the base material. Further, the unfoamed multilayer sheet may comprise an optional configuration such as a non-foaming resin layer A, a non-foaming resinlayerB, a design pattern layer, a surface protective layer, a primer layer, and an embossed pattern. These configurations are in the same contents as those described in "A. Foamed multilayer sheet" above; thus, the descriptions herein are omitted. Also, the unfoamed multilayer sheet of the present disclosure is usually a sheet used for producing the above-described foamed multilayer sheet.

### 4. Production method

The method for producing the unfoamed multilayer sheet of the present disclosure includes, but is not limited to, a method comprising a step of forming a foaming-agent-containing resin layer in which a foaming-agent-containing resin layer is formed on a base material using a foaming-agent-containing resin composition containing a resin component, a foaming agent, and a light stabilizer.

As a method for forming a resin layer containing a foaming agent, for example, an extrusion lamination method in which a resin composition containing a foaming agent is extruded by a T-die extruder onto a base material to form a film, can be used. Further, after forming the sheet of the foaming-agent-containing resin layer by extruding the foaming-agent-containing resin composition, the sheet of the foaming-agent-containing resin layer may be laminated on the base material in a separate step. The cylinder temperature and the die temperature during the extrusion process can be appropriately adjusted.

Further, after the step of forming a foaming-agent-containing resin layer, an electron beam irradiation step of irradiating an electron beam to the foaming-agent-containing resin layer to crosslink the resin component, may be performed. The resin component contained in the foaming-agent-containing resin layer can be cross-linked to form a crosslinked product, so that the properties such as the surface strength, the foaming characteristics of the finally resulting foamed resin layer can be adjusted. The energy intensity of the electron beam is, for example, 150 kV or more and 250 kV or less, and may be 175 kV or more and 200 kV or less. Further, the irradiation dose is, for example, 10 kGy or more and 100 kGy or less, and may be 10 kGy or more and 50 kGy or less. As an electron beam source, a known electron beam irradiation device can be used.

Further, a step of forming a non-foaming resin layer in which a non-foaming resin layer is formed on one or both surface (s) of the foaming-agent-containing resin layer, may be performed. The non-foaming resin layer may be formed by extrusion film formation, or may be formed by heat laminating each film. Among these, coextrusion film formation using a T-die extruder is preferred. For example, when both of the non-foaming resin layer A and the non-foaming resin layer B are arranged, a multi-manifold type T die capable of simultaneously forming three layers is used to simultaneously extrude the foaming-agent-containing resin composition and the resin composition for forming the non-foaming resin layer. In other words, by simultaneously performing the step of forming a foaming-agent-containing resin layer and the step of forming the non-foaming resin layer, it is possible to form a 3-layered body in which the non-foaming resin layer A, the foaming-agent-containing resin layer, and the non-foaming resin layer B are layered in this order.

When an inorganic substance such as a pigment is contained in the foaming-agent-containing resin composition, it is preferable to use a method of forming a 3-layer coextrusion film formation. When the foaming-agent-containing resin layer is formed by extrusion film formation, a residue (gum) of the inorganic substance is liable to be generated in an extrusion port of an extruder, which tends to become a foreign matter on a surface of the foaming-agent-containing resin layer. On the other hand, by using a 3-layer coextrusion film formation method, the foaming-agent-containing resin layer and the non-foaming resin layer are simultaneously formed in such a manner that the foaming-agent-containing resin layer is sandwiched between the non-foaming resin layers not containing the inorganic substance, and thereby the generation of the gum can be suppressed.

Further, each step of forming a design pattern layer, a primer layer, and a surface protective layer may be performed if necessary. The method of forming each layer of the design pattern layer, the primer layer and the surface protective layer is not particularly limited, and examples thereof include a coating method of a usual method such as printing and coating, and an extrusion film formation method.

Note that the present disclosure is not limited to the above embodiment. The foregoing embodiments are merely exemplifications and any other variations having substantially the same constitutions as the technical idea described in the claims of the present disclosure and the same operations and effects thereto are intended to be included within the scope of the present disclosure.

### Examples

### [Example 1]

The foaming-agent-containing resin composition was prepared by melt-kneading with the following formulation.
- Resin: EVA "EV 450 : manufactured by DuPont-Mitsui Polychemical Co., Ltd." 100 parts by mass
- Light stabilizer: Polymer type light stabilizer "XJ100H: manufactured by Nippon Polyethylene Corporation" 1 part by mass
- Inorganic filler: Titanium dioxide "CR58-2: manufactured by ISHIHARA SANGYO KAISHA, LTD." 20 parts by mass
- Foaming agent: Azo-based foaming agent "Vinyfor AC#3: manufactured by EIWA CHEMICAL IND.CO.,LTD." 4 parts by mass
- Foaming aid: Hydrazide-based foaming aid "ADH: manufactured by Otsuka Chemical Co., Ltd." 2 parts by mass

Further, the light stabilizer is a copolymer of ethylene and a compound represented by the following structural formula. The weight average molecular weight is about 50,000.

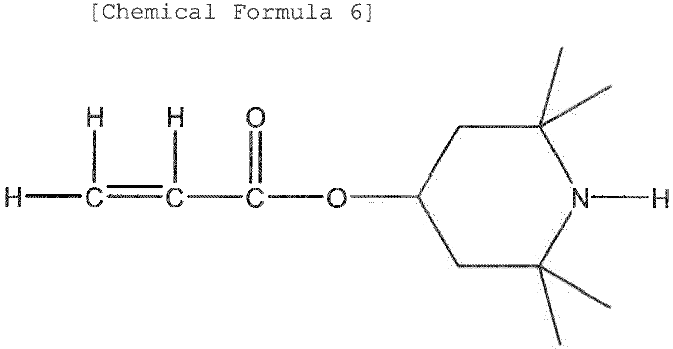

Using a T-die extruder, a foaming-agent-containing resin composition was extruded to a thickness of 100 µm to form a foaming-agent-containing resin layer, and a backing paper (fibrous base material) was laminated on one surface to form an unfoamed multilayer sheet. The extrusion conditions were the cylinder temperature of 110°C and the die temperature of 120°C.

The obtained unfoamed multilayer sheet was irradiated with an electron beam (200 kV, 35 kGy) from the side of the foaming-agent-containing resin layer. Next, an acrylic water ink (manufactured by SHOWA INK MANUFACTURING CO., LTD) was coated on the foaming-agent-containing resin layer using a gravure printing machine to form a design pattern layer. Thereafter, the resin layer was heated in a gear oven at 220°C for 30 seconds to 40 seconds to make the foaming-agent-containing resin layer foam, and thereby a foamed resin layer was obtained.

### [Example 2]

A foamed multilayer sheet was obtained in the same manner as in Example 1, except that the blending amount of the light stabilizer was changed to 0.3 parts by mass.

### [Example 3]

A foamed multilayer sheet was obtained in the same manner as in Example 1, except that the blending amount of the light stabilizer was changed to 3 parts by mass.

### [Example 4]

A foamed multilayer sheet was obtained in the same manner as in Example 1, except that the kind of resin was changed to EMAA "N1110H : manufactured by DuPont-Mitsui Polychemicals Co., Ltd.".

### [Comparative Example 1]

A foamed multilayer sheet was obtained in the same manner as in Example 1, except that no light stabilizer was used.

### [Comparative Example 2]

A foamed multilayer sheet was obtained in the same manner as in Example 1, except that the kind of the light stabilizer was changed to ADK STAB LA- 68 (manufactured by ADEKA CORPORATION, molecular weight: about 1900).

### [Evaluation]

### <Bleed resistance>

The bleed resistance of the foamed multilayer sheets obtained in Examples 1 to 4 and Comparative Examples 1 and 2 was respectively evaluated. Specifically, the foamed multilayer sheet was stored in a constant temperature bath at 40°C, and then the surface of the foamed multilayer sheet was measured by FT-IR (Fourier Transform Infrared Spectrophotometer) at stages of 0 hour and 168 hours (1 week), and a peak derived from the light stabilizer was observed. Evaluation basis
- ○: Peak growth derived from the light stabilizer was confirmed.
- X: Peak growth derived from the light stabilizer was not confirmed.

### <Durability>

Durability of the foamed multilayer sheets obtained in Examples 1 to 4 and Comparative Examples 1 and 2 was respectively evaluated. Specifically, using an ultraviolet ray fade meter ("U48" manufactured by Suga Test Instruments Co., Ltd.), the temperature of the black panel was set at 63°C, and an ultraviolet ray having a peak of spectral irradiance at a wavelength of 380 nm were irradiated for 1000 hours at an irradiance of 500 W/m² at a wavelength of 300 nm to 700 nm. Thereafter, the surface of the foamed multilayer sheet was subjected to a 100 reciprocating friction test with shirting at a load of 250 g, using a friction tester Type II (JSPS type) defined in a JIS L 0849.
Evaluation basis
- ○: The backing paper was not exposed.
- X: The backing paper was exposed.

**[Table 1]**

| | Example 1 | Example 2 | Example 3 | Example 4 | Comp. Example 1 | Comp. Example 2 |
|---|---|---|---|---|---|---|
| Bleed resistance | ○ | ○ | ○ | ○ | - | × |
| Durability | ○ | ○ | ○ | ○ | × | ○ |

As shown in Table 1, in the foam multilayer sheets obtained in Examples 1 to 4, peak growth derived from the light stabilizer was not confirmed, and bleed resistance was good. Further, the foamed multilayer sheets obtained in Examples 1 to 4 had good durability. On the other hand, in Comparative Example 1, since no light stabilizer was added, durability was low. Also, in Comparative Example 2, although durability was good, peak growth derived from the light stabilizer was confirmed, and bleed resistance was low. As described above, in the present disclosure, it has been confirmed that the bleed-out of a light stabilizer can be suppressed by using the specified polymer-type light stabilizer.

### Reference Signs List

- 1: base material
- 2: foamed resin layer
- 2a: foaming-agent-containing resin layer
- 3: non-foaming resin layer A
- 4: non-foaming resin layer B
- 10: foamed multilayer sheet
- 11: unfoamed multilayer sheet

## Claims

1. A foamed multilayer sheet comprising a base material and a foamed resin layer arranged on one surface side of the base material; wherein
the foamed resin layer contains a resin component and a light stabilizer, and
the light stabilizer contains a copolymer of an olefin and a compound represented by a general formula (1): 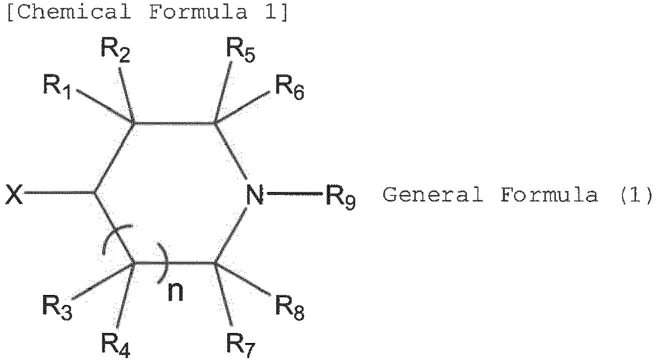 In the general formula (1), n is 0 or 1, X is a polymerizable group which is polymerizable with the olefin, R₁ to R₄ are each independently a hydrogen or a methyl group, R₅ to R₈ are each independently an alkyl group having 1 to 4 carbon atom(s), and R₉ is a hydrogen or an alkyl group having 1 to 4 carbon atom(s).

2. The foamed multilayer sheet according to claim 1, wherein the compound represented by the general formula (1) is a compound represented by a general formula (2): 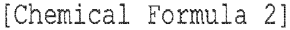 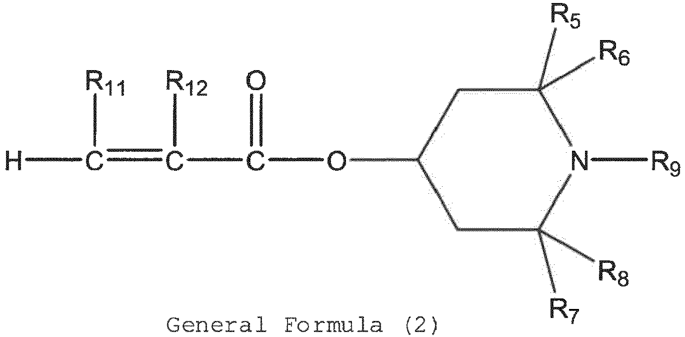 In the general formula (2), R₁₁ and R₁₂ are each independently a hydrogen or a methyl group, R₅ to R₈ are each independently an alkyl group having 1 to 4 carbon atom(s), and R₉ is a hydrogen or an alkyl group having 1 to 4 carbon atom(s).

3. The foamed multilayer sheet according to claim 1 or 2, wherein the foamed multilayer sheet comprises a non-foaming resin layer A in a position opposite to the base material side with respect to the foamed resin layer.

4. The foamed multilayer sheet according to any one of claims 1 to 3, wherein the foamed multilayer sheet comprises a non-foaming resin layer B between the base material and the foamed resin layer.

5. The foamed multilayer sheet according to any one of claims 1 to 4, wherein the foamed resin layer contains at least one of an olefin-based resin and a cross-linking substance thereof as the resin component.

6. The foamed multilayer sheet according to any one of claims 1 to 5, wherein the olefin-based resin is at least one of a polyolefin, an olefin-vinyl ester copolymer, an olefin unsaturated carboxylic acid copolymer, and an olefin unsaturated carboxylic acid ester copolymer.

7. An unfoamed multilayer sheet comprising a base material and a foaming-agent-containing resin layer arranged on one surface of the base material; wherein
the foaming-agent-containing resin layer contains a resin component, a foaming agent, and a light stabilizer, and
the light stabilizer contains a copolymer of an olefin and a compound represented by a general formula (1): 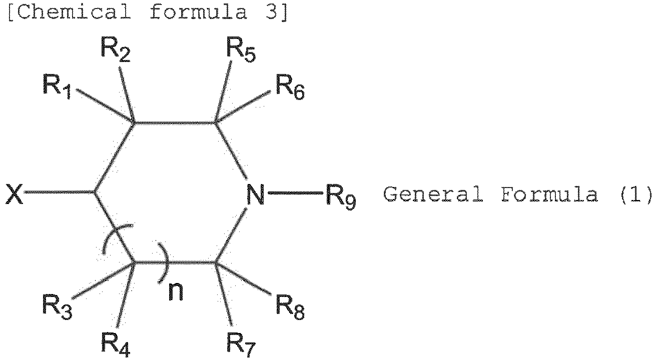 In the general formula (1), n is 0 or 1, X is a polymerizable group which is polymerizable with the olefin, R₁ to R₄ are each independently a hydrogen or a methyl group, R₅ to R₈ are each independently an alkyl group having 1 to 4 carbon atom(s), and R₉ is a hydrogen or an alkyl group having 1 to 4 carbon atom(s).
